# EUROPEAN PATENT APPLICATION

(11) **EP 4 722 082 A1**
(43) Date of publication of application: **08.04.2026**
(21) Application number: 24871026.1
(22) Date of filing: 27.09.2024
(51) Int. Cl.: B62D 6/00

(54) **STEERING MODE SWITCHING METHOD AND APPARATUS, VEHICLE AND STORAGE MEDIUM**

(30) Priority: 28.09.2023 CN 202311281144
(71) Applicant: Great Wall Motor Company Limited, Baoding, Hebei 071000 (CN)
(72) Inventor: SUN, Huiyun, Baoding, Hebei 071000 (CN); MENG, Xianglu, Baoding, Hebei 071000 (CN); YANG, Rui, Baoding, Hebei 071000 (CN); ZHAO, Jingwei, Baoding, Hebei 071000 (CN); ZHANG, Shizhao, Baoding, Hebei 071000 (CN); LI, Jianbo, Baoding, Hebei 071000 (CN)
(86) International application number: PCT/CN2024/121931
(87) International publication number: WO 2025/067491

(57) **Abstract**

The present application provides a steering mode switching method and apparatus, a vehicle and a storage medium. The vehicle performs independent control on each wheel on the basis of an electromechanical brake system. The method is applied to the technical field of vehicles, and the method comprises: determining whether an obtained expected steering mode of a user is the same as the current steering mode of a vehicle or not; if the current steering mode is different from the expected steering mode, acquiring the current vehicle speed of the vehicle and the current wheel speed of each wheel, and determining whether the vehicle meets a steering switching condition or not; and if the vehicle meets the steering switching condition, switching the vehicle from the current steering mode to the expected steering mode by means of obtained braking forces of a plurality of wheels of the vehicle. According to the method, when a vehicle meets a steering switching condition, the vehicle is controlled to be switched from any steering mode to an expected mode required by a user, thereby effectively reducing the steering operation burden of the user, improving the stability of vehicle steering and the driving experience of the user.

## Description

### CROSS-REFERENCE TO RELATED APPLICATIONS

This application claims priority to Chinese Patent Application No. 202311281144.4, filed on September 28, 2023, entitled "STEERING MODE SWITCHING METHOD AND APPARATUS, VEHICLE AND STORAGE MEDIUM", which is incorporated herein by reference in its entirety.

### TECHNICAL FIELD

The present application relates to the field of vehicle technologies, and in particular, to a steering mode switching method and apparatus, vehicle and storage medium in the vehicle field.

### BACKGROUND

With the rapid development of vehicle technology, users have increasingly high requirements for vehicle performance, application scenarios, and intelligent needs. During driving and riding, users further have increasingly high requirements for the sensitivity of vehicle steering performance.

In the related art, during the process of switching the steering mode of the vehicle, the user rotates the steering wheel to control the vehicle to steer. Therefore, the user can switch between a plurality of steering modes of the vehicle by rotating the steering wheel based on road scenarios and actual driving needs.

However, since the steering wheel has a large rotation angle when implementing the steering action, the working space of the rack is increased, and steering errors are likely to be caused. Therefore, further improving the steering mode switching method of the vehicle is particularly important.

### SUMMARY

The present application provides a steering mode switching method and apparatus, vehicle, and storage medium. The method enables a vehicle, when the vehicle satisfies a switching condition, to switch from any steering mode to a desired mode required by a user, thereby effectively reducing steering operation burden of the user, improving smoothness of vehicle steering and driving experience of the user.

In a first aspect, a steering mode switching method is provided, wherein a vehicle performs independent control on each wheel based on an electromechanical brake system, and the method includes: acquiring a desired steering mode of a user, and determining whether a current steering mode of the vehicle is the same as the desired steering mode; acquiring, if the current steering mode is different from the desired steering mode, a current vehicle speed of the vehicle and a current wheel speed of each wheel, and determining, based on the current vehicle speed and the current wheel speed of each wheel, whether the vehicle satisfies a steering switching condition; and adjusting, if the vehicle satisfies the steering switching condition, a braking force of a plurality of wheels of the vehicle based on the desired steering mode, so that the vehicle is switched from the current steering mode to the desired steering mode.

Through the above technical solution, when the current steering mode of the vehicle is different from the desired steering mode of the user, the vehicle can be controlled, based on the steering switching condition of the vehicle, to switch from the current steering mode to the desired steering mode, thereby realizing a steering requirement of the user.

In combination with the first aspect, in some possible implementations, the adjusting the braking force of the plurality of wheels of the vehicle based on the desired steering mode, includes: determining, based on the desired steering mode, a target steering angle of each wheel of the plurality of wheels; and determining, based on the target steering angle of each wheel, the braking force of each wheel, and adjusting, based on the braking force of each wheel, a steering angle of a corresponding wheel.

Through the above technical solution, the vehicle can be switched to the desired steering mode by adjusting the target steering angle of each wheel.

In combination with the first aspect, in some possible implementations, when adjusting the steering angle of the plurality of wheels, the method further includes: acquiring an actual steering angle of each wheel; determining whether an absolute value of a difference between the actual steering angle of any wheel and a corresponding target steering angle of the wheel is greater than a preset safety threshold; and stopping, if the absolute value of the difference between the actual steering angle of any wheel and the corresponding target steering angle of the wheel is greater than the preset safety threshold, switching the vehicle from the current steering mode to the desired steering mode.

Through the above technical solution, based on the difference between the actual steering angle and the target steering angle of each wheel, a start-stop state of switching the vehicle from the current steering mode to the desired steering mode can be controlled, so as to realize the steering requirement of the user.

In combination with the first aspect, in some possible implementations, the determining, based on the desired steering mode, the target steering angle of each wheel of the plurality of wheels, includes: acquiring the current vehicle speed of the vehicle, a current brake pedal opening, a current drive motor torque, a current steering wheel angle, a current wheel speed of each wheel, and a current rear wheel angle; and determining the target steering angle of the corresponding wheel based on the desired steering mode, the current vehicle speed, the current brake pedal opening, the current drive motor torque, the current steering wheel angle, the current wheel speed of each wheel, and the current rear wheel angle.

Through the above technical solution, the target steering angle of each wheel of the vehicle may be accurately acquired based on various signals of the vehicle, thereby improving driving safety performance.

In combination with the first aspect, in some possible implementations, the determining, based on the target steering angle of each wheel, the braking force of each wheel, and adjusting, based on the braking force of each wheel, the steering angle of the corresponding wheel, includes: determining, based on the target steering angle of each wheel, a target yaw angle of the vehicle; and calculating, based on the target yaw angle and an actual yaw angle of the vehicle, the braking force of each wheel, and controlling, based on the braking force of each wheel, the corresponding wheel.

Through the above technical solution, the braking force of each wheel is obtained by acquiring the target yaw angle of the vehicle, so that each wheel can be controlled correspondingly based on the braking force of each wheel, and the steering requirement of the user is realized.

In combination with the first aspect, in some possible implementations, after the determining, based on the current vehicle speed and the current wheel speed of each wheel, whether the vehicle satisfies the steering switching condition, the method further includes: generating, if the vehicle fails to satisfy the steering switching condition, a steering mode switching failure reminder.

Through the above technical solution, when the vehicle fails to satisfy the steering switching condition, a corresponding prompt instruction can be used to remind the user of a steering mode switching failure, so that the user can control the vehicle to steer when the vehicle satisfies the steering switching condition subsequently.

In combination with the first aspect, in some possible implementations, the desired steering mode includes at least one of a front-wheel steering mode, a rear-wheel steering mode, a four-wheel steering mode, an oblique movement mode, a lateral movement mode, and an in-place steering mode.

Through the above technical solution, the steering requirement of the user can be realized by switching between a plurality of steering modes.

In a second aspect, a steering mode switching apparatus is provided, wherein a vehicle performs independent control on each wheel based on an electromechanical brake system, and the apparatus includes:
an acquiring module, configured to acquire a desired steering mode of a user, and determine whether a current steering mode of the vehicle is the same as the desired steering mode;
a determining module, configured to acquire, if the current steering mode is different from the desired steering mode, a current vehicle speed of the vehicle and a current wheel speed of each wheel, and determine, based on the current vehicle speed and the current wheel speed of each wheel, whether the vehicle satisfies a steering switching condition; and
a switching module, configured to switch, if the vehicle satisfies the steering switching condition, the vehicle from the current steering mode to the desired steering mode.

In combination with the second aspect, in some possible implementations, the switching module includes:
a determining unit, configured to determine, based on the desired steering mode, a target steering angle of each wheel of the plurality of wheels; and
an adjusting unit, configured to determine, based on the target steering angle of each wheel, the braking force of each wheel, and adjust, based on the braking force of each wheel, a steering angle of a corresponding wheel.

In conjunction with the second aspect and the above implementation, in some possible implementations, the adjusting unit further includes:
a first acquiring subunit, configured to acquire an actual steering angle of each wheel;
an ascertaining subunit, configured to determine whether an absolute value of a difference between the actual steering angle of any wheel and a corresponding target steering angle of the wheel is greater than a preset safety threshold; and
a switching subunit, configured to stop, if the absolute value of the difference between the actual steering angle of any wheel and a corresponding target steering angle of the wheel is greater than the preset safety threshold, switching the vehicle from the current steering mode to the desired steering mode.

In combination with the second aspect, in some possible implementations, the determining unit includes:
a second acquiring subunit, configured to acquire the current vehicle speed of the vehicle, a current brake pedal opening, a current drive motor torque, a current steering wheel angle, a current wheel speed of each wheel, and a current rear wheel angle; and
a first determining subunit, configured to determine the target steering angle of the corresponding wheel based on the desired steering mode, the current vehicle speed, the current brake pedal opening, the current drive motor torque, the current steering wheel angle, the current wheel speed of each wheel, and the current rear wheel angle.

In combination with the second aspect, in some possible implementations, the adjusting unit includes:
a second determining subunit, configured to determine, based on the target steering angle of each wheel, a target yaw angle of the vehicle; and
a controlling subunit, configured to calculate, based on the target yaw angle and an actual yaw angle of the vehicle, the braking force of each wheel, and control, based on the braking force of each wheel, the corresponding wheel.

In combination with the second aspect, in some possible implementations, after the determining, based on the current vehicle speed and the current wheel speed of each wheel, whether the vehicle satisfies the steering switching condition, the determining module further includes:
a generating unit, configured to generate, if the vehicle fails to satisfy the steering switching condition, a steering mode switching failure reminder.

In combination with the second aspect, in some possible implementations, the desired steering mode includes at least one of a front-wheel steering mode, a rear-wheel steering mode, a four-wheel steering mode, an oblique movement mode, a lateral movement mode, and an in-place steering mode.

In a third aspect, a vehicle is provided, and the vehicle includes: a memory, a processor, and a computer program stored on the memory and executable on the processor, wherein the processor executes the program to implement the steering mode switching method according to any one of claims 1-7.

In a fourth aspect, a computer program product is provided, the computer program product includes: a computer program code, and when the computer program code is run on a computer, the computer is enabled to execute the method in the first aspect or any possible implementation of the first aspect.

### BRIEF DESCRIPTION OF THE DRAWINGS

FIG. 1 is a flowchart of a steering mode switching method according to an embodiment of the present application;
FIG. 2 is a schematic structural diagram of vehicle steering according to an embodiment of the present application;
FIG. 3 is a schematic diagram of a method for calculating a target yaw angle of a vehicle according to an embodiment of the present application;
FIG. 4 is a block diagram of a steering mode switching apparatus according to an embodiment of the present application;
FIG. 5 is a schematic structural diagram of a vehicle according to an embodiment of the present application.

### DETAILED DESCRIPTIONS OF THE EMBODIMENTS

The technical solutions in the present application are clearly and fully described below with reference to the accompanying drawings. In the description of the embodiments of the present application, unless otherwise specified, "/" means "or", for example, A/B can mean A or B; "and/or" in the text is only a description of an association relationship of associated objects, indicating that there can be three relationships. For example, A and/or B can mean: A exists alone, A and B exist simultaneously, and B exists alone. In addition, in the description of the embodiments of the present application, "a plurality of " means two or more.

Hereinafter, the terms "first" and "second" are only used for descriptive purposes, and shall not be understood as implying or indicating relative importance or implicitly indicating the number of indicated technical features. Thus, features defined as "first" and "second" may explicitly or implicitly include one or more of these features.

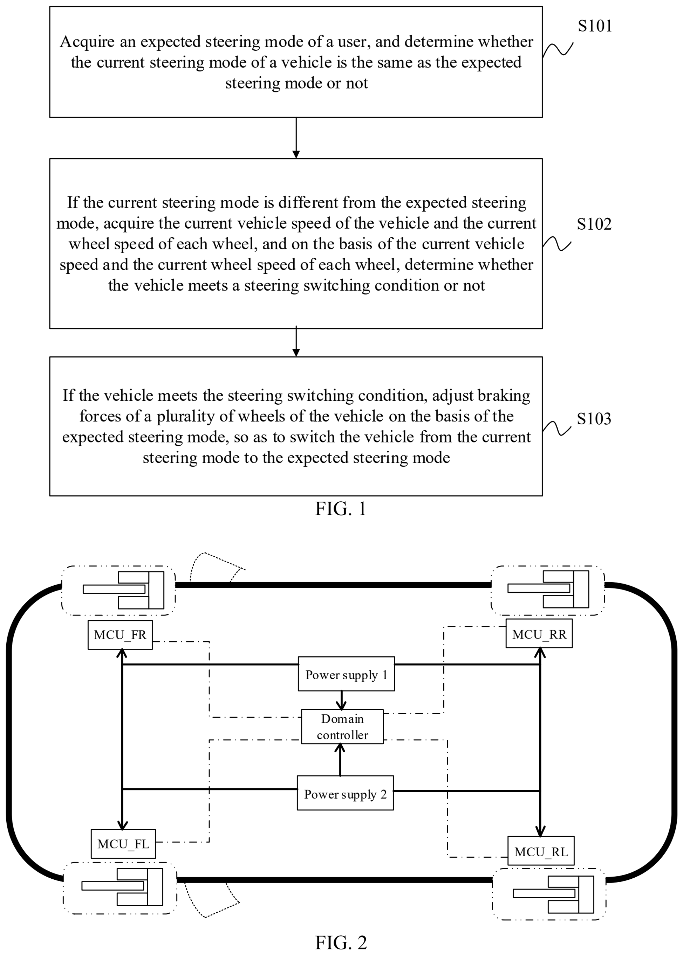

In the related art, when a vehicle is controlled to steer, a user controls the vehicle to steer by rotating a steering wheel. However, since the steering wheel has a large rotation angle when a steering action is implemented, a working space of a rack is increased, and a steering error is likely to be caused, which is unfavorable to driving and riding experience of the user. According to the steering mode switching method of the embodiment of the present application, a plurality of wheels are independently controlled based on an electromechanical brake system. After an environmental parameter of a driving environment of a vehicle and/or a road parameter of a driving road of the vehicle is collected, a desired steering mode of a user is determined. Thus, the vehicle is controlled to switch according to the desired steering mode of the user, so that a steering requirement of the user is realized. The steering mode switching method is specifically described below with reference to FIG. 1.

FIG. 1 is a flowchart of a steering mode switching method according to an embodiment of the present application.

Before the steering mode switching method of the embodiment of the present application is introduced, a vehicle structure involved in the steering mode switching method of the embodiment of the present application is briefly introduced.

As shown in FIG. 2, a vehicle system structure includes: a domain controller, four wheels, and two power supply systems, specifically a left front wheel controller MCU_FL, a right front wheel controller MCU_FR, a left rear wheel controller MCU_RL, a right rear wheel controller MCU_RR, a power supply 1, and a power supply 2.

The MCU_FL and the MCU_FR are connected, and the MCU_RL and the MCU_RR are connected. The power supply 1 is connected to the MCU_FL, the MCU_RL, and the domain controller, and provides electrical energy for the MCU_FL, the MCU_RL, and the domain controller. The power supply 2 is connected to the MCU_FR, the MCU_RR, and the domain controller, and provides electrical energy for the MCU_FR, the MCU_RR, and the domain controller. The power supply 1 and the power supply 2 can be redundant to each other to provide electrical energy for the entire vehicle system, so that normal execution of the vehicle steering mode is ensured.

It should be noted that a chassis structure of the vehicle in the embodiment of the present application mainly includes four electromechanical brake system (EMB) actuators, and the four wheels can be independently controlled. The EMB is an actuator driven by a caliper motor, installed on a caliper of a brake mechanism, and the EMB directly brakes the vehicle via the brake mechanism without media such as brake fluid. The EMB replaces a traditional hydraulic brake and is used for a main brake function, and application scope of the EMB is expanded. Therefore, the domain controller of the embodiment of the present application can respectively control four wheels to steer. That is, the MCU_FL can control a left front wheel to steer, the MCU_FR can control a right front wheel to steer, the MCU_RL can control a left rear wheel to steer, and the MCU_RR can control a right rear wheel to steer. Thus, each wheel of the vehicle can be switched from any steering mode to a desired mode required by a user, thereby meeting a steering requirement of the user.

Exemplarily, as shown in FIG. 1, the vehicle performs independent control on each wheel based on the EMB system, and the method includes following steps.

In Step S101, Acquiring a desired steering mode of a user, and determining whether a current steering mode of the vehicle is the same as the desired steering mode.

Specifically, in the embodiment of the present application, after the vehicle is powered on, the vehicle first enters a braking mode. After the vehicle is started, an environmental parameter and/or a road parameter around the vehicle is collected to detect the current steering mode of the vehicle in real time. After the current steering mode of the vehicle is detected, the desired steering mode of the user for the vehicle is acquired, and consistency between the current steering mode of the vehicle and the desired steering mode of the user is further determined. If the current steering mode of the vehicle matches the desired steering mode of the user for the vehicle, the vehicle continues to drive in this steering mode. Otherwise, the current steering mode of the vehicle is switched to meet a steering requirement of the user.

The desired steering mode of the user may include at least one of a front-wheel steering mode, a rear-wheel steering mode, a four-wheel steering mode, an oblique movement mode, a lateral movement mode, and an in-place steering mode.

In Step S102, Acquiring, if the current steering mode is different from the desired steering mode, a current vehicle speed of the vehicle and a current wheel speed of each wheel, and determining, based on the current vehicle speed and the current wheel speed of each wheel, whether the vehicle satisfies a steering switching condition.

Specifically, in the embodiment of the present application, if the acquired current steering mode of the vehicle is different from the desired steering mode of the user, a state parameter of the vehicle is further acquired. For example, the current vehicle speed of the vehicle and the current wheel speed of each wheel are acquired. Based on the acquired current vehicle speed of the vehicle and the acquired current wheel speed of each wheel, whether the vehicle satisfies the steering switching condition is determined. For example, the acquired current vehicle speed of the vehicle and the acquired current wheel speed of each wheel can be compared with an optimal threshold for vehicle steering. That is, both the current vehicle speed and the current wheel speed of each wheel are within an optimal steering threshold range allowing the vehicle to switch steering. At this time, the vehicle is determined to satisfy the steering switching condition, and the vehicle can switch the steering mode.

It should be noted that the optimal threshold for vehicle steering can be calibrated by those skilled in the art based on a specific application of vehicle steering, so that stability of vehicle steering mode switching is ensured.

Specifically, in the embodiment of the present application, after being acquired, the current vehicle speed of the vehicle and the current wheel speed of each wheel are compared with the optimal threshold for vehicle steering. For example, the optimal threshold for vehicle steering is that both the vehicle speed and the wheel speed are less than or equal to 3 kph. Therefore, when the current vehicle speed of the vehicle and the current wheel speed of each wheel are both less than or equal to 3 kph, that is, the current wheel speed of each wheel of the vehicle is less than or equal to 3 kph, and the current vehicle speed is less than or equal to 3 kph, the current wheel speed and the current vehicle speed are indicated to be within the optimal steering threshold range, and the vehicle can be determined to satisfy the steering switching condition.

Optionally, in an embodiment of the present application, after whether the vehicle satisfies the steering switching condition is determined based on the current wheel speed of each wheel and the current vehicle speed, the method further includes: generating, if the vehicle fails to satisfy the steering switching condition, a steering mode switching failure reminder.

Specifically, in the embodiment of the present application, based on the current vehicle speed and the current wheel speed of each wheel, if the vehicle is determined to fail to satisfy the steering switching condition, the steering mode switching failure reminder can be generated to the user through a vehicle-mounted horn or a vehicle-mounted buzzer. For example, a relevant reminder, such as "Beep beep beep. The current vehicle steering mode switching failed. Please attempt to switch again later.", is sent to the user, so as to facilitate a subsequent steering mode switching operation performed by the user.

In Step S103, adjusting, if the vehicle satisfies the steering switching condition, a braking force of a plurality of wheels of the vehicle based on the desired steering mode, so that the vehicle is switched from the current steering mode to the desired steering mode.

Optionally, in an embodiment of the present application, the adjusting the braking force of the plurality of wheels of the vehicle based on the desired steering mode, includes: determining, based on the desired steering mode, a target steering angle of each wheel of the plurality of wheels; and determining, based on the target steering angle of each wheel, the braking force of each wheel, and adjusting, based on the braking force of each wheel, a steering angle of a corresponding wheel.

Specifically, in the embodiment of the present application, after the vehicle is determined to satisfy the steering switching condition based on the current vehicle speed and the current wheel speed of each wheel, first, the target steering angle of each wheel of the plurality of wheels is determined based on the desired steering mode of the user; second, the braking force of each wheel is determined based on the target steering angle of each wheel of the plurality of wheels, and the steering angle of the corresponding wheel is adjusted based on the braking force of each wheel, so as to adjust the steering angle to a steering angle parameter satisfying the wheel steering condition, and switch the vehicle from the current steering mode to the desired steering mode of the user based on the steering angle parameter.

Optionally, in an embodiment of the present application, the determining, based on the desired steering mode, the target steering angle of each wheel of the plurality of wheels, includes: acquiring the current vehicle speed of the vehicle, a current brake pedal opening, a current drive motor torque, a current steering wheel angle, the current wheel speed of each wheel, and a current rear wheel angle; and determining the target steering angle of the corresponding wheel based on the desired steering mode, the current vehicle speed, the current brake pedal opening, the current drive motor torque, the current steering wheel angle, the current wheel speed of each wheel, and the current rear wheel angle.

Specifically, in the embodiment of the present application, after the desired steering mode of the user is acquired, the target steering angle for each wheel of the vehicle needs to be further acquired based on the desired steering mode. For example, the target steering angle of each wheel of the plurality of wheels may be determined by combining the current vehicle speed, the current brake pedal opening, the current drive motor torque, the current steering wheel angle, the current wheel speed of each wheel, the current rear wheel angle with the desired steering mode of the user.

Specifically, in the embodiment of the present application, the current vehicle speed may be acquired through a vehicle radar speedometer. The current brake pedal opening may be acquired through a pedal travel sensor. The current drive motor torque may be acquired through a motor torque sensor. The current steering wheel angle may be acquired through a steering wheel angle sensor. The current wheel speed of each wheel may be acquired through a wheel speed sensor. The current rear wheel angle of the vehicle may be acquired through a rear wheel angle sensor. Thus, the target steering angle of each wheel of the plurality of wheels is determined based on the acquired current vehicle speed, the acquired current brake pedal opening, the acquired current drive motor torque, the acquired current steering wheel angle, the acquired current wheel speed of each wheel, the acquired current rear wheel angle combined with the desired steering mode of the user.

Optionally, in an embodiment of the present application, the determining, based on the target steering angle of each wheel, the braking force of each wheel, and adjusting, based on the braking force of each wheel, the steering angle of the corresponding wheel, includes: determining, based on the target steering angle of each wheel, a target yaw angle of the vehicle; and calculating, based on the target yaw angle and an actual yaw angle of the vehicle, the braking force of each wheel, and controlling, based on the braking force of each wheel, the corresponding wheel. Specifically, in the embodiment of the present application, after the target steering angle of each wheel is acquired, the target yaw angle of the vehicle is calculated based on the target steering angle of each wheel. At the same time, the braking force of each wheel is calculated based on the actual yaw angle of the vehicle and the target yaw angle of the vehicle, so as to adjust the steering angle of the corresponding wheel based on the braking force of each wheel, so that switching to the desired steering mode of the user is completed.

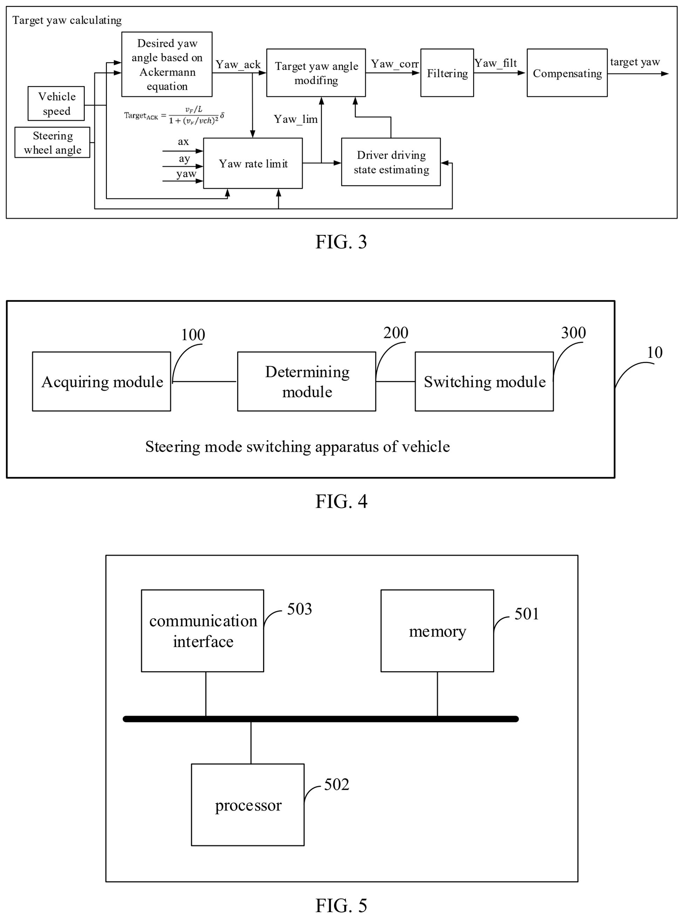

Specifically, FIG. 3 is a schematic diagram of a target yaw calculation according to an embodiment of the present application. The target yaw angle of the present application may be calculated based on a single-track model. As shown in FIG. 3, in the embodiment of the present application, a desired yaw angle is obtained by using the Ackermann equation based on the current steering wheel angle. The vehicle speed is combined, and a yaw rate limit is added based on a current motion state of the vehicle. Then, the target yaw angle is modified based on an operation state of the user. After a filtering processing, to enhance robustness of the system, corresponding compensation is further performed on a calculated value after the filtering processing. Finally, the target yaw angle corresponding to the desired steering mode of the user is output.

It should be noted that in the embodiment of the present application, the target steering angles corresponding to different steering modes vary. For example, when the desired steering mode of the user is the front-wheel steering mode, a corresponding target steering angle of the wheel may be between 0° and 40°. When the desired steering mode of the user is the rear-wheel steering mode, a corresponding target steering angle of the wheel may be between 0° and 10°. When the desired steering mode of the user is the four-wheel steering mode, a corresponding target steering angle of the wheel may be between 0° and 40°. When the desired steering mode of the user is the oblique movement mode, a corresponding target steering angle of the wheel may be between 0° and 10°. When the desired steering mode of the user is the lateral movement mode, a corresponding target steering angle of the wheel may be between 0° and 10°. When the desired steering mode of the user is the in-place steering mode, a corresponding target steering angle of the wheel may be between 0° and 10°.

For example, when the desired steering mode of the user in the embodiment of the present application is the front-wheel steering mode, if the target steering angle is 45°, the target steering angle fails to be within a range from 0° to 40°, and the target steering angle is indicated to fail to satisfy the target steering angle range corresponding to the front-wheel steering mode. If the target steering angle is 25°, the target steering angle is within the range from 0° to 40°, the target steering angle is indicated to satisfy the target steering angle range corresponding to the front-wheel steering mode, and the braking force of each wheel can be further determined based on the target steering angle, so as to control the corresponding wheel based on the braking force of each wheel.

Further, in the embodiment of the present application, after the current steering mode is switched to the desired steering mode of the user, steering thresholds of the vehicle speed corresponding to different steering modes need to be further defined. For example, in the front-wheel steering mode, a maximum allowable vehicle speed Vmax of the vehicle. In the rear-wheel steering mode, the current vehicle speed of the vehicle may be greater than or equal to 2 kph and less than or equal to 10 kph. In the four-wheel steering mode, the current vehicle speed of the vehicle may be greater than or equal to 2 kph and less than or equal to 10 kph. In the oblique steering mode, the current vehicle speed of the vehicle may be greater than or equal to 2 kph and less than or equal to 10 kph. In the lateral movement steering mode, the current vehicle speed of the vehicle may be greater than or equal to 2 kph and less than or equal to 10 kph. In the in-place steering mode, the current vehicle speed of the vehicle may be greater than or equal to 2 kph and less than or equal to 10 kph.

For example, if the current steering mode of the vehicle is the rear-wheel steering mode, and the desired steering mode of the user is the oblique steering mode, when the vehicle satisfies the steering switching condition, that is, the current vehicle speed of the vehicle and the current wheel speed of each wheel are both less than 3 kph, the braking force of the plurality of wheels of the vehicle may be adjusted based on the desired steering mode, so as to control the vehicle to switch from the rear-wheel steering mode to the oblique steering mode. After the vehicle is switched to the oblique steering mode, the current vehicle speed of the vehicle is controlled to be within the range of 2kph ≤ V ≤ 10kph.

It should be noted that in the embodiment of the present application, when the vehicle is controlled to switch from any steering mode to the desired steering mode of the user, the determined steering condition and the steering method are as described in the foregoing embodiments, and are be specifically repeated here.

Optionally, in an embodiment of the present application, when the steering angle of the plurality of wheels is adjusted, the method further includes: acquiring an actual steering angle of each wheel; determining whether an absolute value of a difference between the actual steering angle of any wheel and a corresponding target steering angle of the wheel is greater than a preset safety threshold; and stopping, if the absolute value of the difference between the actual steering angle of any wheel and the corresponding target steering angle of the wheel is greater than the preset safety threshold, switching the vehicle from the current steering mode to the desired steering mode.

The preset safety threshold may be a safety threshold adopted by those skilled in the art according to an actual use requirement, or a safety threshold obtained through a plurality of computer simulations. The preset safety threshold is not specifically limited here.

Specifically, in the embodiment of the present application, when the steering angle of the plurality of wheels is adjusted, first, the actual steering angle of each wheel in the current steering mode is acquired. Second, a difference between the actual steering angle of any wheel and the target steering angle of the said wheel is acquired, and a determination is made on whether an absolute value of the difference, between the actual steering angle of any wheel and the target steering angle of the said wheel, is greater than the preset safety threshold. If the absolute value of the difference, between the actual steering angle of any wheel and the target steering angle of the said wheel, is greater than the preset safety threshold, it indicates that the vehicle is unsuitable for steering mode switching at present; otherwise, a traffic hazard may occur. Therefore, switching of the vehicle from the current steering mode to the desired steering mode shall be halted to ensure driving safety of the user.

In summary, according to the steering mode switching method of the present application, whether an acquired desired steering mode of a user is the same as a current steering mode of a vehicle is determined. When the current steering mode is different from the desired steering mode, a current vehicle speed and a current wheel speed of each wheel are acquired. And then whether the vehicle satisfies a steering switching condition is determined. When the vehicle satisfies the steering switching condition, the vehicle is switched from the current steering mode to the desired steering mode by means of an acquired braking force of a plurality of wheels of the vehicle. Thus, the problem is solved that when the vehicle is controlled to steer by rotating the steering wheel, the steering wheel has a large rotation angle when a steering action is implemented, a working space of a rack is increased, and a steering error is likely to be caused, which is unfavorable to driving and riding experience of a user. According to the embodiment of the present application, the vehicle can be controlled to switch from any steering mode to the desired mode required by the user when the vehicle satisfies the steering switching condition, thereby effectively reducing steering operation burden of the user, improving steering stability of the vehicle, and enhancing driving experience of the user.

FIG. 4 is a block diagram of a steering mode switching apparatus according to an embodiment of the present application.

Exemplarily, as shown in FIG. 4, a vehicle performs independent control on each wheel based on an EMB system. The apparatus 10 may include: an acquiring module 100, a determining module 200, and a switching module 300.

The acquiring module100 is configured to acquire a desired steering mode of a user, and determine whether a current steering mode of the vehicle is the same as the desired steering mode.

The determining module 200 is configured to acquire, if the current steering mode is different from the desired steering mode, a current vehicle speed of the vehicle and a current wheel speed of each wheel, and determine, based on the current vehicle speed and the current wheel speed of each wheel, whether the vehicle satisfies a steering switching condition.

The switching module 300 is configured to adjust, if the vehicle satisfies the steering switching condition, a braking force of a plurality of wheels of the vehicle based on the desired steering mode, so that the vehicle is switched from the current steering mode to the desired steering mode.

Optionally, in an embodiment of the present application, the switching module 300 includes:
a determining unit, configured to determine, based on the desired steering mode, a target steering angle of each wheel of the plurality of wheels; and
an adjusting unit, configured to determine, based on the target steering angle of each wheel, the braking force of each wheel, and adjust, based on the braking force of each wheel, a steering angle of a corresponding wheel.

Optionally, in an embodiment of the present application, the adjusting unit further includes:
a first acquiring subunit, configured to acquire an actual steering angle of each wheel;
an ascertaining subunit, configured to determine whether an absolute value of a difference between the actual steering angle of any wheel and a corresponding target steering angle of the wheel is greater than a preset safety threshold; and
a switching subunit, configured to stop, if the absolute value of the difference between the actual steering angle of any wheel and a corresponding target steering angle of the wheel is greater than the preset safety threshold, switching the vehicle from the current steering mode to the desired steering mode.

Optionally, in an embodiment of the present application, the determining unit includes:
a second acquiring subunit, configured to acquire the current vehicle speed of the vehicle, a current brake pedal opening, a current drive motor torque, a current steering wheel angle, the current wheel speed of each wheel, and a current rear wheel angle; and
a first determining subunit, configured to determine the target steering angle of the corresponding wheel based on the desired steering mode, the current vehicle speed, the current brake pedal opening, the current drive motor torque, the current steering wheel angle, the current wheel speed of each wheel, and the current rear wheel angle.

Optionally, in an embodiment of the present application, the adjusting unit includes:
a second determining subunit, configured to determine, based on the target steering angle of each wheel, a target yaw angle of the vehicle; and
a controlling subunit, configured to calculate, based on the target yaw angle and an actual yaw angle of the vehicle, the braking force of each wheel, and control, based on the braking force of each wheel, the corresponding wheel.

Optionally, in an embodiment of the present application, after the determining, based on the current vehicle speed and the current wheel speed of each wheel, whether the vehicle satisfies the steering switching condition, the determining module 200 further includes:
a generating unit, configured to generate, if the vehicle fails to satisfy the steering switching condition, a steering mode switching failure reminder.

Optionally, in an embodiment of the present application, the desired steering mode includes at least one of a front-wheel steering mode, a rear-wheel steering mode, a four-wheel steering mode, an oblique movement mode, a lateral movement mode, and an in-place steering mode.

In summary, according to the steering mode switching apparatus of the present application, whether an acquired desired steering mode of a user is the same as a current steering mode of a vehicle is determined. When the current steering mode is different from the desired steering mode, a current vehicle speed and a current wheel speed of each wheel are acquired. And then whether the vehicle satisfies a steering switching condition is determined. When the vehicle satisfies the steering switching condition, the vehicle is switched from the current steering mode to the desired steering mode by means of an acquired braking force of a plurality of wheels of the vehicle. Thus, the problem is solved that when the vehicle is controlled to steer by rotating the steering wheel, the steering wheel has a large rotation angle when a steering action is implemented, a working space of a rack is increased, and a steering error is likely to be caused, which is unfavorable to driving and riding experience of a user. According to the embodiment of the present application, the vehicle can be controlled to switch from any steering mode to the desired mode required by the user when the vehicle satisfies the steering switching condition, thereby effectively reducing steering operation burden of the user, improving steering stability of the vehicle, and enhancing driving experience of the user.

FIG. 5 is a schematic structural diagram of a vehicle according to an embodiment of the present application.

It should be understood that the method introduced above can be applied to the vehicle with the structure shown in FIG. 5.

In addition, the embodiment of the present application further protects a vehicle. The vehicle may include a memory 501 and a processor 502. The memory 501 stores an executable program code. The processor 502 is configured to call and execute the executable program code to execute the steering mode switching method provided by the embodiment of the present application.

Further, the vehicle further includes: a communication interface 503. The communication interface 503 is configured for communication between the memory 501 and the processor 502.

In the embodiment, a device can be divided into functional modules according to the above method examples. For example, each functional module may correspond to each function respectively, or two or more functions may be integrated into one processing module. The above integrated modules may be implemented in the form of hardware. It should be noted that division of modules in the embodiment is schematic and only a logical function division. In an actual implementation, other division methods may be provided.

In the case of dividing each functional module corresponding each function respectively, the device may further include an acquiring module, a determining module, a switching module, and the like. It should be noted that all relevant contents of the steps involved in the above method embodiments can be referred to the functional description of the corresponding functional modules, and are not be repeated here.

It should be understood that the device provided in the embodiment is configured to execute the above-mentioned steering mode switching method, so the device can achieve the same beneficial effects as the above-mentioned implementation method.

In the case of using integrated units, the device may include a processing module and a storage module. When the device is applied to a car, the processing module may be configured to control and manage actions of the car. The storage module may be configured to support the car to execute mutual program code, and the like.

The processing module may be a processor or a controller. The processing module may implement or execute various exemplary logical blocks, modules and circuits contemptuously treated in disclosure of the present application. The processor may alternatively be a combination of computing functions, such as a combination of one or more microprocessors, a combination of a digital signal processor (DSP) and a microprocessor, and the like. The storage module may be a memory.

In addition, the device provided in the embodiment of the present application may specifically be a chip, component or module, and the chip may include a processor and a memory connected with the processor. The memory is configured to store an instruction. When the processor calls and executes the instruction, the chip can execute the steering mode switching method provided in the foregoing embodiment.

The embodiment further provides a computer-readable storage medium. A computer program code is stored in the computer-readable storage medium. When the computer program code is run on a computer, the computer is enabled to execute the above relevant method steps to implement the steering mode switching method provided in the foregoing embodiment.

The embodiment further provides a computer program product. When the computer program product is run on a computer, the computer is enabled to execute the relevant steps above to implement the steering mode switching method provided in the foregoing embodiment.

The device, the computer-readable storage medium, the computer program product or chip provided in the embodiment are all configured to execute the corresponding method provided above. Therefore, beneficial effects achieved by the device, the computer-readable storage medium, the computer program product or chip can be referred to the beneficial effects in the corresponding method provided above, and are will not be repeated here.

Through the description of the above implementation manners, those skilled in the art can understand that for the convenience and conciseness of description, the division of the above functional modules is taken as an example for illustration. In practical applications, the above functions can be allocated to different functional modules according to needs. That is, an internal structure of the device is divided into different functional modules to complete all or part of the above described functions.

In the embodiments provided in the present application, it should be understood that the disclosed apparatus and the disclosed method may be implemented in other ways. For example, the apparatus embodiments described above are only schematic. For example, the division of modules or units is only a logical function division. In actual implementation, there may be other division ways. For example, multiple units or components may be combined or integrated into another apparatus, or some features may be ignored or not executed. In addition, the displayed or discussed mutual couplings, direct couplings, or communication connections may be implemented through some interfaces. Indirect coupling or communication connection between apparatuses or units may take a form of electrical, mechanical or other configurations.

The above contents are only specific implementation manners of the present application, but the protection scope of the present application is not limited thereto. Any person skilled in the art can easily think of changes or substitutions within the technical scope disclosed in the present application, which should be covered in the protection scope of the present application. Therefore, the protection scope of the present application should be subject to the protection scope of the claims.

## Claims

1. A steering mode switching method, wherein a vehicle performs independent control on each wheel based on an electromechanical brake system, and the method comprises:
acquiring a desired steering mode of a user, and determining whether a current steering mode of the vehicle is the same as the desired steering mode;
acquiring, if the current steering mode is different from the desired steering mode, a current vehicle speed of the vehicle and a current wheel speed of each wheel, and determining, based on the current vehicle speed and the current wheel speed of each wheel, whether the vehicle satisfies a steering switching condition; and
adjusting, if the vehicle satisfies the steering switching condition, a braking force of a plurality of wheels of the vehicle based on the desired steering mode, so that the vehicle is switched from the current steering mode to the desired steering mode.

2. The method according to claim 1, wherein the adjusting the braking force of the plurality of wheels of the vehicle based on the desired steering mode, comprises:
determining, based on the desired steering mode, a target steering angle of each wheel of the plurality of wheels; and
determining, based on the target steering angle of each wheel, the braking force of each wheel, and adjusting, based on the braking force of each wheel, a steering angle of a corresponding wheel.

3. The method according to claim 2, wherein when adjusting the steering angle of the plurality of wheels, the method further comprises:
acquiring an actual steering angle of each wheel;
determining whether an absolute value of a difference between the actual steering angle of any wheel and a corresponding target steering angle of the wheel is greater than a preset safety threshold; and
stopping, if the absolute value of the difference between the actual steering angle of any wheel and the corresponding target steering angle of the wheel is greater than the preset safety threshold, switching the vehicle from the current steering mode to the desired steering mode.

4. The method according to claim 2, wherein the determining, based on the desired steering mode, the target steering angle of each wheel of the plurality of wheels, comprises:
acquiring the current vehicle speed of the vehicle, a current brake pedal opening, a current drive motor torque, a current steering wheel angle, a current wheel speed of each wheel, and a current rear wheel angle; and
determining the target steering angle of the corresponding wheel based on the desired steering mode, the current vehicle speed, the current brake pedal opening, the current drive motor torque, the current steering wheel angle, the current wheel speed of each wheel, and the current rear wheel angle.

5. The method according to claim 2, wherein the determining, based on the target steering angle of each wheel, the braking force of each wheel, and adjusting, based on the braking force of each wheel, the steering angle of the corresponding wheel, comprises:
determining, based on the target steering angle of each wheel, a target yaw angle of the vehicle; and
calculating, based on the target yaw angle and an actual yaw angle of the vehicle, the braking force of each wheel, and controlling, based on the braking force of each wheel, the corresponding wheel.

6. The method according to claim 1, wherein after the determining, based on the current vehicle speed and the current wheel speed of each wheel, whether the vehicle satisfies the steering switching condition, the method further comprises:
generating, if the vehicle fails to satisfy the steering switching condition, a steering mode switching failure reminder.

7. The method according to any one of claims 1-6, wherein the desired steering mode comprises at least one of a front-wheel steering mode, a rear-wheel steering mode, a four-wheel steering mode, an oblique movement mode, a lateral movement mode, and an in-place steering mode.

8. A steering mode switching apparatus, wherein a vehicle performs independent control on each wheel based on an electromechanical brake system, and the apparatus comprises:
an acquiring module, configured to acquire a desired steering mode of a user, and determine whether a current steering mode of the vehicle is the same as the desired steering mode;
a determining module, configured to acquire, if the current steering mode is different from the desired steering mode, a current vehicle speed of the vehicle and a current wheel speed of each wheel, and determine, based on the current vehicle speed and the current wheel speed of each wheel, whether the vehicle satisfies a steering switching condition; and
a switching module, configured to switch, if the vehicle satisfies the steering switching condition, the vehicle from the current steering mode to the desired steering mode.

9. A vehicle, comprising: a memory, a processor, and a computer program stored on the memory and executable on the processor, wherein the processor executes the program to implement the steering mode switching method according to any one of claims 1-7.

10. A computer-readable storage medium, wherein the computer-readable storage medium stores a computer program, and when the computer program is executed, the steering mode switching method according to any one of claims 1-7 is implemented.
